# EUROPEAN PATENT SPECIFICATION

(11) **EP 2 611 677 B1**
(45) Date of publication and mention of the grant of the patent: **07.09.2016**
(21) Application number: 11751667.4
(22) Date of filing: 29.08.2011
(51) Int. Cl.: B62J 9/00

(54) **BAG HOOK SYSTEM**
HAKENSYSTEM FÜR EINEN BEUTEL
SYSTÈME DE CROCHET DE SAC

(30) Priority: 30.08.2010 NL 2005291
(43) Date of publication of application: 10.07.2013
(73) Proprietor: Basil B.V., 7071 AA Ulft (NL)
(72) Inventor: BOTER, Jasper, NL-7203 BR Zutphen (NL); VAN HAAFTEN, Guido, NL-7007 HM Doetinchem (NL); MIJNEN, Wilfried Hendrikus Maria, NL-7064 AP Silvolde (NL)
(74) Representative: V.O.
(86) International application number: PCT/NL2011/050585
(87) International publication number: WO 2012/030214

(56) References cited:
- EP-A1- 0 477 010
- EP-A2- 2 048 068
- EP-A2- 2 168 853
- DE-A1-102007 040 557
- US-A- 5 579 971
- US-A1- 2008 041 901
- US-B1- 6 283 671
- US-B1- 6 702 505

## Description

The invention relates to a bag hook system for attachment of a bag to a luggage carrier of a two-wheeler, in particular a bicycle.

Bag hook systems for attachment of a bicycle bag to a luggage carrier of a bicycle are generally known and are widely used. A bag hook system usually comprises two bag hooks which are attached to the bicycle bag and a locking element for locking the bag to the luggage carrier. The two bag hooks are usually attached to the rear wall of the bicycle bag using screws and/or rivets, whereby the screws and/or rivets are fitted through the rear wall of the bicycle bag. When a bag hook gets broken, either the bicycle bag cannot be attached to the luggage carrier anymore or a shoe repairman needs to remove the bag hook and fit a new bag hook through the rear wall of the bag. A same bag hook is often not deliverable anymore, in consequence of which the bicycle bag will often have two different bag hooks. Also, the shoe repairman needs to provide extra strengthening provisions on the rear wall to fit the new bag hook. This will give the bicycle bag a less fine appearance. It is also a drawback that when the locking element is broken, the bag cannot be locked to the luggage carrier anymore and/or the shoe repairman needs to fit a new locking element through the rear wall of the bag.

Also, two-wheelers, such as bicycles, are sometimes designed with a battery pack under or adjacent the luggage carrier to electrically support the cyclist in the pedaling movements. By placing a battery pack under or adjacent the luggage carrier, the space between the battery pack and a luggage carrier rod may become relatively small, so that a known bag hook cannot be attached to the luggage carrier rod anymore. A bicycle bag with such a known bag hook is thus only attachable to a limited number of bicycle models.

Publication US 5 579 971 describes a bag hook system having an attachment element on which two bag hooks are detachably couplable with the attachment element.

Publication DE 10 2007 040 557 describes a bag hook system according to the preamble of claim 1 with two hooks of which the hooks comprise two wedge-shaped legs.

An object of the invention is to make a bag hook system available that counteracts at least one of the above-mentioned disadvantages. In particular, an object of the invention is to make a bag hook system available that is more universally applicable.

To this end, the invention provides a bag hook system for attachment of a bag to a luggage carrier of a two-wheeler according to claim 1, comprising an attachment element which is arranged for attachment to the bag and a bag hook manufactured in one piece which is detachably couplable with the attachment element, wherein the bag hook comprises an attachment leg and a free leg which are substantially equally long.

By providing a bag hook system comprising an attachment element and a bag hook which is detachably couplable in the attachment element, a flexible and simply reparable bag hook system can be made available. The attachment element can be attached to the rear wall of a bicycle bag and the bag hook can be detachably coupled with the attachment element. If the bag hook gets broken, it can be relatively simply removed from the attachment element and relatively simply a new bag hook can be coupled with the attachment element. Also, the bag hook can be relatively simply replaced with a different bag hook, for instance, when the bicycle bag is to be suspended from a differently designed luggage carrier of a bicycle. The attachment element can remain attached to the rear wall of the bicycle bag, so that upon replacement of the bag hook, interventions on the rear wall of the bicycle bag can be omitted.

By further providing a bag hook that is manufactured in one piece, a relatively simple bag hook can be obtained which can be simply replaced by the consumer himself.

By designing a part of a leg of the bag hook as a locking part, the bag hook may be self-locking. By making the two legs of the bag hook substantially equally long, the locking action of the locking part may be further supported. The locking part of a first leg, in combination with a substantially straight second leg, provide for sufficient locking of the bag hook around a luggage carrier rod. Thus, enclosed between the first leg, the second leg and the locking part of the first leg, there is formed, as it were, a receiving space in which a rod of a bicycle can be received and locked. By making the second leg substantially as long as the first leg, the thus formed receiving space can be configured to be sufficiently closed and hence sufficiently locking for a luggage carrier rod.

By configuring the locking part as a wedge-shaped part, elegantly, a receiving space can be created between the locking part, the attachment leg and the free leg of the bag hook, to receive therein a luggage carrier rod in a locking manner. By configuring the locking part as a wedge-shaped part, the bag hook can be manufactured in a simple manner in one piece, for example, as an extrusion element or as a casting or as a rolled or bent sheet element.

By designing the first leg with the locking part as the attachment leg of the bag hook, with the attachment leg facing towards the bicycle bag rear wall, and designing the second leg as a free leg, with the free leg facing away from the bicycle bag rear wall, a compact bag hook can be obtained.

Advantageously, the free leg may be of substantially straight configuration, so that the bag hook can be attached to practically all available luggage carriers, in particular also to luggage carriers provided with a battery pack where there is only limited space between the luggage carrier rod and the battery pack.

The bag hook can be detachably coupled with the attachment element using coupling means. The coupling means may be provided, for instance, on a side of the attachment leg facing towards the bicycle bag and/or attachment plate. The attachment plate may be provided with a recess for receiving the coupling means. The coupling means may be designed, for example, as snap means for forming a snap connection with a recess in the attachment element. The coupling means can comprise, for example, hook-shaped elements which can hook behind a rib of the attachment element. The coupling means may also be designed, for example, as a pin which can fall into a groove of the attachment element. Many embodiments of the coupling means are possible. Possibly, the bag hook may be fixed to the attachment element using a screw which may be relatively well accessible and relatively simply detachable.

Advantageously, the attachment element is arranged for one bag hook. Per bicycle bag, two attachment elements can then be attached to the rear wall of the bicycle bag. In each attachment element one bag hook can be coupled. In this way, a relatively inexpensive bag hook system can be furnished whose bag hooks are relatively simply replaceable and are attachable to relatively many luggage carrier models.

Possibly, the attachment element may also be arranged to receive two bag hooks. For instance, the attachment element may be designed as a plate-shaped element which is configured at both ends to receive the coupling means of a bag hook. For instance, such an attachment element can comprise at both ends a recess in which the coupling means of a bag hook can be received.

Possibly, the attachment element may be arranged for movably receiving a bag hook. For instance, the attachment element may be provided with a guide rail to which the bag hook can be movably coupled. For instance, the bag hook may be designed with hook-shaped elements which can hook on the guide rail. Thus, the bag hook can be moved along the guide rail until a desired position has been reached. Once a desired position has been reached, the bag hook can be fixed with respect to the attachment element, for example, using a screw.

Additionally, the bag hook system may be provided with a separate locking element. The additional locking element can optionally be provided on the attachment element. The additional locking element is optional and can function as an extra locking. The additional locking element is preferably pivotable between a locking position in which a luggage carrier rod is locked and a release position in which a luggage carrier rod is released.

Further advantageous embodiments are represented in the subclaims.

The invention will be further elucidated in exemplary embodiments represented in the appended drawings. In the drawings:
Fig. 1 shows a schematic perspective exploded view of a first embodiment of a bag hook system according to the invention;
Fig. 2 shows a schematic front view and cross section of an attachment element according to the invention;
Fig. 3 shows a schematic side view of the bag hook system of Fig. 1;
Fig. 4 show a schematic perspective exploded view of a second embodiment of a bag hook system according to the invention;
Fig. 5 shows a schematic perspective view of a third embodiment of a bag hook system according to the invention; and
Fig. 6 shows a schematic perspective view of a fourth embodiment of a bag hook system according to the invention.

In the drawings, equal parts are indicated with equal reference numerals. The drawings are given by way of non-limiting exemplary embodiments.

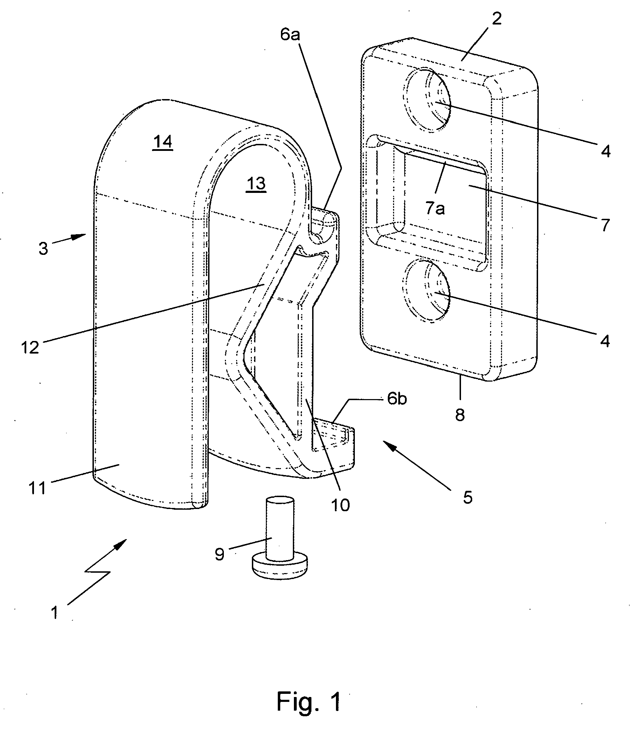

Fig. 1 shows a bag hook system 1 according to the invention. The bag hook system 1 comprises an attachment element 2 and a bag hook 3. The attachment element 2 is arranged for attachment to a bicycle bag. In this exemplary embodiment the attachment element 2 is provided with openings 4 through which, for example, a screw, bolt, or rivet can be guided to attach the attachment element to the rear wall of the bicycle bag. Possibly, the attachment element 2 may be designed as an integral part of the rear wall of a bicycle bag.

The bag hook 3 is detachably couplable with the attachment element 2. By designing the bag hook 3 to be detachable, the bag hook 3 can be relatively simply replaced, fur instance, in case of damage of the bag hook or for the attachment of a different bag hook for a different model of luggage carrier. The bag hook 3 is provided with coupling means 5 for detachable coupling with the attachment element 2. The coupling means 5 are here provided with hook-shaped elements 6 which engage in a recess 7 of the attachment element 2 and engage around an underside of the attachment element 2. In this exemplary embodiment the hook-shaped elements 6a engage behind a rib 7a of the recess 7. The hook-shaped elements 6b engage behind the underside 8 of the attachment element 2. Alternatively, on the attachment element 2 a second rib may be provided, behind which the hook-shaped elements 6b can hook.

Possibly, the coupling means 5 may also be designed differently, for example, as snap fingers which can snap in openings of the attachment element 2. Also, the coupling means 5 may be designed, for example, as a pin which can hook into a groove of the attachment element. Various embodiments are possible.

As the hook-shaped elements 6a engage behind the rib 7a and the hook-shaped elements 6b engage behind the underside 8 of the attachment element 2, the construction height of the attachment element 2 can remain relatively small and the attachment element 2 can be relatively flat.

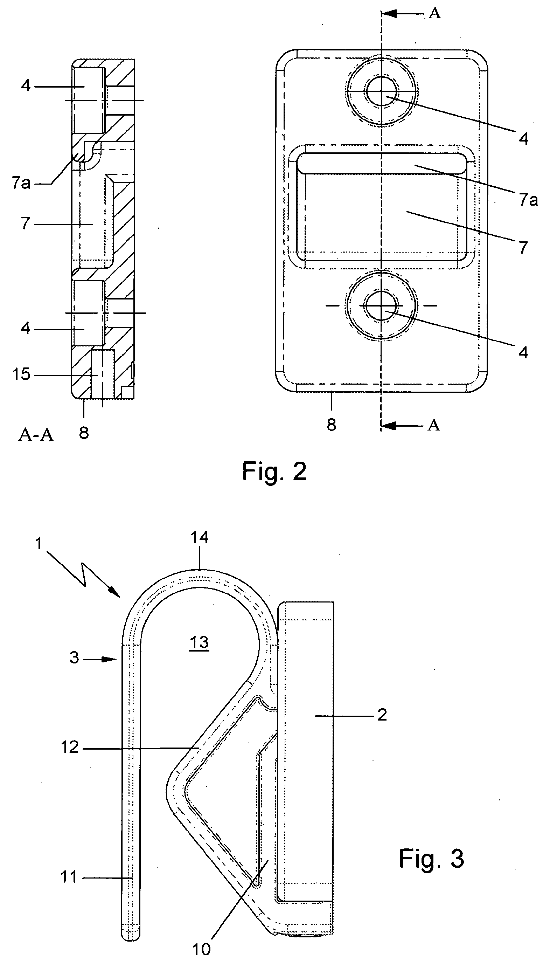

When the bag hook 3 is coupled with the attachment element 2, for instance, by hooking the bag hook 3 in the attachment element 2 as shown in Fig. 3, the bag hook 3 can be fixed with a fixing means 9 which can engage in a fixing space 15. The fixing means 9 is here designed as a screw which is relatively simply detachable, but may also be designed, for example, as a lip, bolt and nut, or otherwise. The screw 9 can be screwed into a tapped cavity 15. Alternatively, a self-tapping screw 9 may be used which can be screwed into a cavity 15. In some embodiments of the coupling means a fixing means can be omitted. In this exemplary embodiment the screw 9 and the cavity 15 are provided at the underside of the bag hook 3 and the attachment element 2, but the screw 9 and the cavity 15 may also be provided at a front side of the attachment leg 10 and the attachment element 2. The free leg 11 may then be, for instance, somewhat shorter than the attachment leg 10 to create room for fixing the screw 9.

The bag hook 3 is a hook manufactured in one piece, comprising a first leg 10 and a second leg 11. The first leg 10 is here designed as an attachment leg 10 and the second leg 11 is here designed as a free leg 11. The attachment leg faces towards the attachment element 2. The free leg 11 faces away from the attachment element 2. The free leg 11 and the attachment leg 10 are connected with each other by a bridge par 14 which is here of bent design, but may also be of different configuration, for example, straight or angular.

The attachment leg 10 in this exemplary embodiment comprises a locking part 12 for locking a luggage carrier rod 16 in the bag hook. The locking part 12 is here of wedge-shaped design so that a receiving space 13 is formed in which a luggage carrier rod can be received. The receiving space 13 is, as it were, enclosed by the free leg 11, the attachment leg 10, the locking part 12 and the bridge part 14. By manufacturing the bag hook 3 in one piece, the bag hook 3 can be produced relatively inexpensively and the locking part 12 can relatively simply be integrally formed. Thus a relatively simple, robust and compact bag hook can be obtained.

The attachment leg 10 also comprises the coupling means 5. The locking part 12 faces towards the free leg 11, the coupling means 5 face away from the free leg 11.

The attachment leg 10 and the free leg 11 of the bag hook 3 are substantially equally long, as can be seen, for example, in Fig. 3. The free leg 11 is substantially straight. By making the free leg 11 approximately as long as the attachment leg 10 and making it substantially straight, the bag hook 3 is applicable to various luggage carriers. In particular also to luggage carriers with little space between the luggage carrier rod and, for example, a battery pack, or to luggage carriers which are so designed that there is only limited room next to the luggage carrier rod. By making the free leg 11 straight, the construction height of the bag hook system 1 can remain relatively small. Also the construction height of the attachment element 2 can be made relatively small in that in this exemplary embodiment the coupling means 5 can engage in and/or around the attachment element 2. Owing to a relatively small construction height of the bag hook system 1, the bag hook system 1 can be less sensitive to, for example, damage.

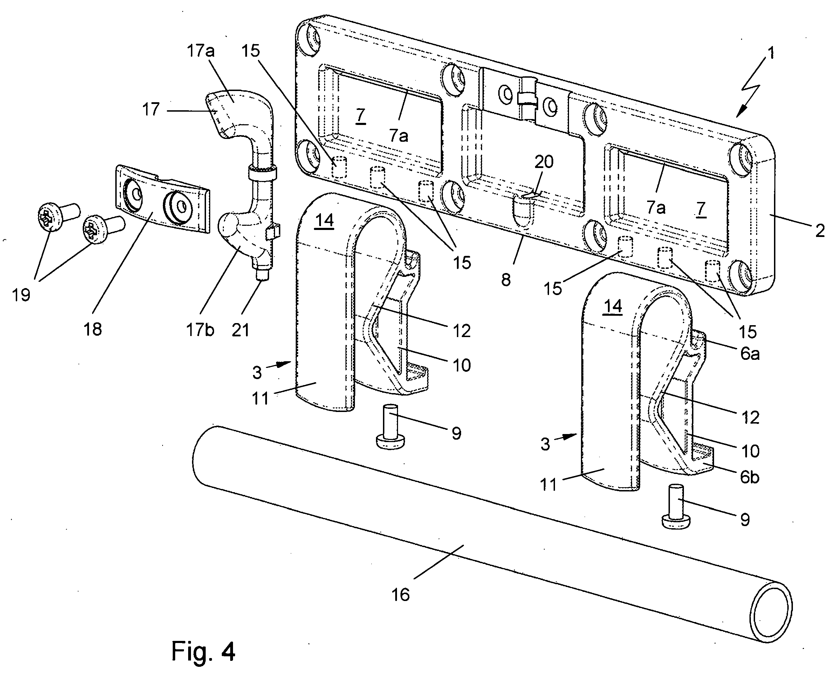

In the exemplary embodiment shown in Fig. 1, Fig. 2, and Fig. 3, the attachment element 2 is arranged for coupling with one bag hook 3. Fig. 4, Fig. 5, and Fig. 6 show exemplary embodiments of the bag hook system 1 in which the attachment element 2 is arranged for coupling with two bag hooks 3.

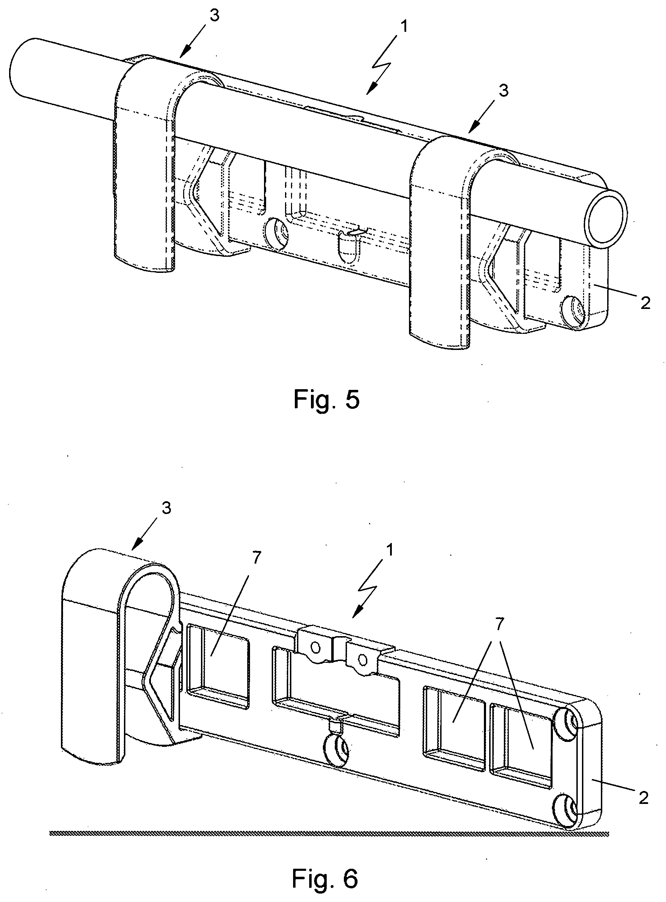

Fig. 4 and Fig. 5 show a bag hook system 1 according to the invention in which the bag hooks 3 are movably received in the attachment element 2. To this end, the recesses 7 of the attachment element 2 have been made of larger design, so that the bag hook 3 can move back and forth in them. Possibly, the attachment element 2 may be designed for non-movably receiving two bag hooks 3, with the recess 7 configured in the same manner as in the single attachment element shown in Fig. 1 and Fig. 2.

A luggage carrier rod 16 can be received in the receiving space 13 of the bag hook 3 and be locked by the locking part 12.

In the exemplary embodiment shown in Fig. 4 and Fig. 5, the rib 7a is extended with respect to the exemplary embodiment of Figs. 1 through 3, thereby allowing the bag hook 3 to slide over the rib 7a. The rib 7a is thus designed as a guideway. The bag hook 3 can be snapped in the recess 7 by means of the hook-shaped elements 6a which hook behind the rib 7a and the hook-shaped elements 6b which hook around the underside 8 of the attachment element 2. Thereupon the bag hook 3 can be slid over the rib 7a to the desired position. In this exemplary embodiment three positions of the fixing space 15 are provided in which the bag hook 3 can be fixed using the screw 9. The bag hook 3 is thus slidable between the three adjustment positions. The attachment element 2 may also be designed with more or fewer adjustment positions.

Optionally, the bag hook system 1 may be provided with an additional locking element 17. The additional locking element 17 is pivotable between a locking position in which the luggage carrier rod 16 is locked and a release position in which the luggage carrier rod 16 is released. In the release position the locking element 17 substantially abuts against the attachment element 2. In the locking position the locking element 17 is substantially at right angles to the attachment element 2. The locking element 17 can be moved manually between the locking position and the release position. In the release position the bag can be hung on the luggage carrier rod, the user can thereupon pivot the locking element to the locking position. To take the bag off, the user can pivot the locking element back to the release position again.

By designing the locking element 17 in the locking position to be not fully at right angles but nearly at right angles and somewhat oblique with respect to a position fully at right angles, to the luggage carrier rod, damage of the locking element 17 may be obviated in the event of a bag being placed on the luggage carrier rod with the locking element 17 still in the locking position. By designing the locking element 17 in the locking position to include a small angle with respect to a position at right angles, a bag can yet be placed on the luggage carrier rod without damaging the locking element 17. The bag will move the locking element 17 to the release position. A user can pivot the locking element 17 back to the locking position.

Possibly, the locking element 17 may be biased towards the locking position, for instance, using a spring. By designing the locking element 17 with a bias, the locking element 17 may possibly automatically lock a 17 luggage carrier rod 16 when the luggage carrier rod 16 activates the locking element. 17 To take the bag off the luggage carrier, the user can manually move the locking element 17 to the release position to release the bag.

The locking element 17 is provided with two arms 17a and 17b between which a luggage carrier rod 16 can be received and locked. The locking element 17 in this exemplary embodiment is pivotably attached against the attachment element 2 using a lip 18 and screws 19. In the attachment element 2 a hole 20 is provided in which a leg 21 of the locking element 17 can pivot.

The bag hook system 1 may also be designed without locking element 17, as shown in Fig. 5. Possibly, a cover plate may then be used to cover the provisions for the locking element 17 on the attachment element 2.

Fig. 6 shows a next embodiment of an attachment element 2 which is designed for movably coupling a bag hook 3. In this exemplary embodiment, a total of four recesses 7 are provided, of which two recesses 7 at one end of the attachment element 2 and two recesses 7 at the other end of the attachment element 2. A bag hook 3 can here be coupled in two recesses. More recesses 7 are also possible, so that the bag hook 3 is movable between more positions.

The invention is not limited to the exemplary embodiments represented here. Many variants are possible and will be clear to the skilled person within the purview of the following claims.

## Claims

1. A bag hook system (1) for attachment of a bag to a luggage carrier of a two-wheeler, comprising an attachment element (2) which is arranged for attachment to the bag and a bag hook (3) manufactured in one piece which is detachably couplable with the attachment element (2), wherein the bag hook (3) comprises an attachment leg (10) and a free leg (11), wherein the free leg (11) and the attachment leg (10) are connected by a bridge part (14), the attachment leg (10) comprises a locking part (12), wherein the locking part (12) of the attachment leg (10) forms a wedge-shaped part of the attachment leg (10), **characterized in that** the attachment leg (10) and the free leg (11) are substantially equally long and the free leg (11) is substantially straight, wherein the wedge-shaped locking part (12) faces towards the free leg (11) so that a receiving space (13) is formed in which a luggage carrier rod (16) can be received and locked, wherein the receiving space (13) is enclosed by the free leg (11), the attachment leg (10), the locking part (12) and the bridge part (14).

2. A bag hook system according to claim 1, wherein the locking part (12) extends towards the free leg (11) over more than half of the distance between the straight free leg (11) and the attachment leg (10).

3. A bag hook system according to claim 1 or 2, wherein the bag hook (3) comprises coupling means (5) for detachably coupling the bag hook (3) with the attachment element (2).

4. A bag hook system according to claim 3, wherein the coupling means (5) comprise a hook-shaped element (6a, 6b).

5. A bag hook system according to claims 3 or 4, wherein the attachment element (2) comprises a recess (7) for detachably receiving the coupling means (5).

6. A bag hook system according to any one of the preceding claims, wherein the attachment element (2) is arranged for receiving one bag hook (3).

7. A bag hook system according to any one of claims 1 through 5, wherein the attachment element (2) is arranged for receiving two bag hooks (3).

8. A bag hook system according to claim 6 or 7, wherein the attachment element (2) is arranged for movably coupling a bag hook (3).

9. A bag hook system according to claim 8, wherein the attachment element (2) is provided with a guide rail (7a) for movably coupling a bag hook (3).

10. A bag hook system according to any one of the preceding claims, wherein the attachment element (2) is provided with an additional locking element (17).

11. A bag hook system according to claim 10, wherein the additional locking element (17) is pivotable between a locking position and a release position.

## Patentansprüche

1. Hakensystem (1) für einen Beutel zur Befestigung eines Beutels an einem Gepäckträger eines Zweirads, umfassend ein Befestigungselement (2), geeignet zur Befestigung an dem Beutel und einem aus einem Stück hergestellten Beutelhaken (3), der abnehmbar an das Befestigungselement (2) gekoppelt werden kann, wobei der Beutelhaken (3) ein Befestigungsbein (10) und ein freies Bein (11) umfasst, wobei das freie Bein (11) und das Befestigungsbein (10) durch ein Brückenteil (14) verbunden sind, wobei das Befestigungsbein (10) ein Verriegelungsteil (12) umfasst, wobei das Verriegelungsteil (12) des Befestigungsbeins (10) ein keilförmiges Teil des Befestigungsbeins (10) bildet, **dadurch gekennzeichnet, dass** das Befestigungsbein (10) und das freie Bein (11) im Wesentlichen gleich lang sind und das freie Bein (11) im Wesentlichen gerade ist, wobei das keilförmige Verriegelungsteil (12) zu dem freien Bein (11) zeigt, sodass ein Aufnahmeraum (13) gebildet wird, in dem eine Gepäckträgerstange (16) aufgenommen und verriegelt werden kann, wobei der Aufnahmeraum (13) von dem freien Bein (11), dem Befestigungsbein (10), dem Verriegelungsteil (12) und dem Brückenteil (14) umschlossen wird.

2. Hakensystem für einen Beutel nach Anspruch 1, wobei das Verriegelungsteil (12) über mehr als die Hälfte des Abstands zwischen dem geraden freien Bein (11) und dem Befestigungsbein (10) zu dem freien Bein (11) hin verläuft.

3. Hakensystem für einen Beutel nach Anspruch 1 oder 2, wobei der Beutelhaken (3) Kopplungsmittel (5) umfasst, um den Beutelhaken (3) abnehmbar mit dem Befestigungselement (2) zu koppeln.

4. Hakensystem nach Anspruch 3, wobei die Kopplungsmittel (5) ein hakenförmiges Element (6a, 6b) umfassen.

5. Hakensystem für einen Beutel nach Anspruch 3 oder 4, wobei das Befestigungselement (2) eine Vertiefung (7) umfasst, um die Kopplungsmittel (5) abnehmbar aufzunehmen.

6. Hakensystem für einen Beutel nach einem der vorhergehenden Ansprüche, wobei das Befestigungselement (2) angeordnet ist, um einen Beutelhaken (3) aufzunehmen.

7. Hakensystem für einen Beutel nach einem der Ansprüche 1 bis 5, wobei das Befestigungselement (2) angeordnet ist, um zwei Beutelhaken (3) aufzunehmen.

8. Hakensystem für einen Beutel nach Anspruch 6 oder 7, wobei das Befestigungselement (2) angeordnet ist, um einen Beutelhaken (3) beweglich zu koppeln.

9. Hakensystem für einen Beutel nach Anspruch 8, wobei das Befestigungselement (2) mit einer Führungsschiene (7a) versehen ist, um einen Beutelhaken (3) beweglich zu koppeln.

10. Hakensystem für einen Beutel nach einem der vorhergehenden Ansprüche, wobei das Befestigungselement (2) mit einem zusätzlichen Verriegelungselement (17) versehen ist.

11. Hakensystem für einen Beutel nach Anspruch 10, wobei das zusätzliche Verriegelungselement (17) zwischen einer Verriegelungsposition und einer Freigabeposition drehbar ist.

## Revendications

1. Système de crochet de sac (1) pour fixer un sac à un porte-bagages d'un deux roues, comprenant un élément de fixation (2) qui est agencé pour être fixé au sac et un crochet de sac (3) fabriqué d'une seule pièce qui peut être couplé de façon détachable à l'élément de fixation (2), dans lequel le crochet de sac (3) comprend une patte de fixation (10) et une patte libre (11), dans lequel la patte libre (11) et la patte de fixation (10) sont reliées par une partie de pont (14), la patte de fixation (10) comprend une partie de verrouillage (12), dans lequel la partie de verrouillage (12) de la patte de fixation (10) forme une partie en forme de cale de la patte de fixation (10), **caractérisé en ce que** la patte de fixation (10) et la patte libre (11) sont sensiblement de longueur égale et la patte libre (11) est sensiblement droite, et dans lequel la partie de verrouillage en forme de cale (12) est orientée vers la patte libre (11) de sorte qu'un espace de réception (13) soit formé dans lequel une tige de porte-bagages (16) peut être reçue et verrouillée, dans lequel l'espace de réception (13) est clos par la patte libre (11), la patte de fixation (10), la partie de verrouillage (12) et la partie de pont (14).

2. Système de crochet de sac selon la revendication 1, dans lequel la partie de verrouillage (12) s'étend vers la patte libre (11) sur plus de la moitié de la distance entre la patte libre droite (11) et la patte de fixation (10).

3. Système de crochet de sac selon la revendication 1 ou 2, dans lequel le crochet de sac (3) comprend un moyen de couplage (5) pour coupler de façon détachable le crochet de sac (3) à l'élément de fixation (2).

4. Système de crochet de sac selon la revendication 3, dans lequel le moyen de couplage (5) comprend un élément en forme de crochet (6a, 6b).

5. Système de crochet de sac selon les revendications 3 ou 4, dans lequel l'élément de fixation (2) comprend un évidement (7) pour recevoir de façon détachable le moyen de couplage (5).

6. Système de crochet de sac selon l'une quelconque des revendications précédentes, dans lequel l'élément de fixation (2) est agencé pour recevoir un crochet de sac (3).

7. Système de crochet de sac selon l'une quelconque des revendications 1 à 5, dans lequel l'élément de fixation (2) est agencé pour recevoir deux crochets de sac (3).

8. Système de crochet de sac selon la revendication 6 ou 7, dans lequel l'élément de fixation (2) est agencé pour coupler de façon amovible un crochet de sac (3).

9. Système de crochet de sac selon la revendication 8, dans lequel l'élément de fixation (2) est doté d'un rail de guidage (7a) pour coupler de façon amovible un crochet de sac (3).

10. Système de crochet de sac selon l'une quelconque des revendications précédentes, dans lequel l'élément de fixation (2) est doté d'un élément de verrouillage supplémentaire (17).

11. Système de crochet de sac selon la revendication 10, dans lequel l'élément de verrouillage supplémentaire (17) peut pivoter entre une position de verrouillage et une position de dégagement.
